Europäisches Patentamt

European Patent Office

Office européen des brevets

(11) Publication number: **0 342 972**
**A2**

# EUROPEAN PATENT APPLICATION

(21) Application number: 89305022.9

(22) Date of filing: 18.05.89

(51) Int. Cl.⁴: **A 23 L 1/314**

(30) Priority: 20.05.88 US 196914

(43) Date of publication of application:
23.11.89 Bulletin 89/47

(84) Designated Contracting States:
AT BE CH DE ES FR GB GR IT LI LU NL SE

(71) Applicant: **THE PROCTER & GAMBLE COMPANY**
**One Procter & Gamble Plaza**
**Cincinnati Ohio 45202 (US)**

(72) Inventor: **Hellyer, James Allen**
**5811 Mildred Lane**
**Milford Ohio 45150 (US)**

**Coston, Gilda Marie**
**6627 Ravenal Court**
**Cincinnati Ohio 45213 (US)**

**Kong-Chan, Josephine Ling-Yee**
**8534 Ashwood Drive**
**West Chester Ohio 45069 (US)**

(74) Representative: **Gibson, Tony Nicholas et al**
**Procter & Gamble (NTC) Limited Whitley Road**
**Longbenton Newcastle upon Tyne NE12 9TS (GB)**

(54) Meat products with reduced animal fat and calories.

(57) Comminuted meat products which are reduced in calories and animal fat are produced by adding to a lean meat base a fatty substance which is non-digestible, partially digestible, or is lower in net caloric efficiency than animal fat.

Bundesdruckerei Berlin

**Description**

## MEAT PRODUCTS WITH REDUCED ANIMAL FAT AND CALORIES

### Field of the Invention

This invention relates to comminuted meat products that exhibit a reduction in calories and animal fat.

### Background of the Invention

There is an ever-increasing interest among consumers in food products which contain less total fat, saturated fat, cholesterol, and calories. Such products are useful in controlling body weight and reducing the risk of heart and artery disease.

Meat products, especially those derived from beef or pork, generally contain from about 15% to about 50% total fat, from about 5% to about 25% saturated fat, from about 50 mg cholesterol per 100 g to about 100 mg cholesterol per 100 g, and about from 200 to about 500 calories per 100 g. Because of this high fat and calorie content, there is a significant need for meat products, especially those derived from pork or beef, which have a substantially reduced fat and reduced calorie content and yet which provide the gustatory and physical properties of conventional full-fat meat products.

The largest sources of fat consumption in the United States diet are hamburgers, cheeseburgers, meat loaf, hot dogs, sausages, and lunch meats which together account for about 15% of total daily dietary fat intake. All of these dietary fat sources are various forms of comminuted meat products.

Many attempts to lower serum cholesterol and the risk of heart and artery disease have been targeted towards replacing the conventional muscle or edible tissue animal protein with a vegetable or alternative animal protein source such as, for example, egg albumen, blood, lactoalbumin, or casein. For example, U.S. Patent 3,814,823 of Yang & Olsen, (assigned to The Procter & Gamble Company), issued June 4, 1974, described a meat analog wherein the protein was derived from vegetable protein sources such as soybeans, safflower seed, corn, peanuts, wheat, peas, sunflower seed, cottonseed, coconut, rapeseed, sesame seed, leaf proteins, or single cell proteins such as yeast and the like. Animal protein, such as egg albumen, was also said to be suitable for use, if desired, as the protein source. The animal fat normally present in conventional edible tissue or muscle animal protein was replaced with liquid or semi-liquid glyceride shortening derived from animal, vegetable, or marine fats and oils, including synthetically prepared shortenings. Special processing, including heat treatment, was required in order to yield a meat analog having the desired unidirectional parallel fiber structure.

There are three main shortcomings existent in meat analogs produced in this manner. First, proteins derived from vegetable protein sources are nutritionally deficient when compared to those derived from animal protein sources. This is evident, in part, by examination of the amino acid content, or profile, of a chosen plant protein. For example, soybean protein and peanut protein are deficient in the sulfur-containing amino acids, such as methionine; wheat gluten is deficient in lysine. Nutritionists have applied the term "limiting" to such amino acids, and have noticed a protein characterized by a particular limiting essential amino acid is effectively levelled in nutritive value to the content of the first limiting amino acid. For example, if a certain vegetable protein was relied upon for the sole source of dietary protein, and if that protein was characterized by an amino acid profile revealing certain limiting amino acids, it would be necessary to consume in the diet an excessive amount of that protein in order to insure the nutritionally required intake of those limiting essential amino acids. Besides the sheer economic waste of such a diet, there is increasing evidence in the scientific literature that excess dietary protein may have detrimental physiological effects.

Secondly, although the edible triglycerides generally used to simulate the animal fat that would be inherent in animal tissue protein are more healthy for human consumption, particularly because these fats are higher in unsaturates and contain no cholesterol, there is no reduction in calories because, gram-for-gram, these two types of fats are of equivalent caloric content.

Thirdly, costly processing may be required to produce such meat analogs. Many methods of preparing meat analogs exist, but these processes often entail costly and/or time-consuming procedures. For example, U.S. Patent No. 3,935,319 of Howard (assigned to The Procter & Gamble Company), issued January 27, 1976, described a protein food product consisting of edible protein fibers (preferably protein derived from vegetable sources, although animal protein was also suitable) and a stabilized fat. The stabilized fat therein consisted of an edible triglyceride and an edible binder necessary to inhibit separation of the fat from the protein. U.S. Patent No. 3,904,775 of Harwood et al., (assigned to The Quaker Oats Company), issued September 9, 1975, disclosed a method for preparing a simulated meat product which required special processes to puff or expand the meat product giving it the appearance of simulated meat. Finally, Japanese Patent JA-7220377 of Fujita et al., (assigned to Nisshin Senji Co., Ltd.), issued June 9, 1972, disclosed the production of a simulated meat product containing an artificial fat resembling that of natural meat in appearance and feel, made by first combining a cold-coagulable protein, a heat-coagulable protein, a solid fat, and an O/W emulsifier and then

EP 0 342 972 A2

adding edible protein fibers.

The present invention substantially alleviates the above cited problems. The protein source to be utilized is edible animal muscle or tissue protein, specifically that of lean meat derived from beef, pork, and/or poultry. As has been explained, animal proteins offer nutritional superiority when compared to vegetable proteins. In addition, the fatty properties will be supplied by low-calorie fatty materials which are non-digestible, partially digestible, or are lower in net caloric efficiency when compared to regular fats. These materials will give the animal muscle protein the physical and gustatory characteristics it normally receives from its inherent natural animal fatty tissue, yet will achieve a caloric reduction not present in either the natural full-fat product or the analog wherein the natural fat is replaced with digestible animal and/or vegetable oil and/or shortening. Furthermore, dietary replacements will be provided for the major sources of fat in the U.S. diet; namely, comminuted meat products in various forms. Finally, no extra ingredients or special processing will be necessary since the fatty materials can be simply melted and added to the lean meats during the normal grinding or colloid milling operation used to prepare comminuted meat products such as ground beef and sausages.

It is therefore an object of this invention to create dietetic meat products that yield as much as a 75% reduction in calories, a 95% reduction in animal fat and in saturated fat, and a 70% reduction in cholesterol, as compared to conventional fat-containing meats.

It is likewise an object of this invention to produce dietetic meat products which are reduced in calories and in animal fat yet retain the nutritional protein characteristics of meat protein.

It is a further object of this invention to create dietetic comminuted meat products that retain the physical and gustatory qualities rendered by the fat contained in traditional fat-containing, comminuted meat products yet add less animal fat to the diet.

It is another object of this invention to obviate the need for special ingredients or special processing in order to produce the subject dietetic meat products.

It is an additional object of this invention to create a reduced-calorie/reduced-animal fat hamburger that exhibits the tenderness and juiciness of full-fat hamburgers.

It is also an object of this invention to produce a variety of reduced-calorie/reduced-animal fat meat analogs, including, but not limited to, ground beef, sausages, frankfurters, wieners (hot dogs), bologna, and lunch meats, containing a lean meat protein source and low-calorie fatty materials which are non-digestible, partially digestible, or are lower in net caloric efficiency when compared to animal fat.

These and other objects of the invention will become clear by the disclosure herein.

All percentages and ratios are by weight unless otherwise indicated.


## Summary of the Invention

Dietetic, comminuted meat products are disclosed which exhibit as much as a 75% reduction in calories, a 95% reduction in animal fat and in saturated fat, and a 70% reduction in cholesterol, as compared to conventional fat-containing meats.

These products contain about the same level of animal protein as conventional meat products, but have about 30% to about 100% of the regular amount of animal fat replaced with low-calorie fatty materials. Said dietetic meat products comprise from about 9% to about 30% of animal protein from lean meat; from about 10% to about 50% of a non-digestible or partially digestible fatty substance which consists essentially of from about 30% to about 100% of low-calorie fatty materials, with the balance being added animal or vegetable fat or animal fat inherent within the lean meat; from about 25% to about 70% total water, inherent within the lean meat or added artificially to the composition; and from 0% to about 10% of non-fatty materials associated with the protein source, such as minerals, or added adjuvant materials.

By "dietetic, comminuted meat products" is meant all forms of ground or pulverized meats containing animal protein which are reduced in calories, animal fat, saturated fat and cholesterol.

By "fatty substance" as used herein is meant a material which consists essentially of from about 30% to about 100% of low-calorie fatty materials, with the balance being animal fat inherent in the lean meat or added animal or vegetable fat.

By "low-calorie fatty materials" as used herein is meant edible materials which can replace the regular triglyceride fats present in conventional meat products. These materials provide the benefits of animal fat, such as consistency, tenderness, juiciness, lubricity and flavor, yet are lower in calories because they are non-digestible, only partially digestible, or are lower in net caloric efficiency compared to animal fat.

By "non-digestible" as used herein is meant that substantially all of the material is not digested or absorbed by the body. Said material passes through the digestive system substantially the same as when it was ingested.

The term "partially digestible" means that at least about 30% of the material is not digested or absorbed by the body.

The term "net caloric efficiency" of a material as used herein means its net contribution of useful energy to the maintenance or growth of the body, taking into account its metabolism, utilization, storage, and excretion by the body. Materials such as glycerides containing $C_8$ and $C_{10}$ fatty acids are known to have lower "net caloric efficiency" than regular glycerides.

3

By "anti-anal leakage (AAL) agent" as used herein is meant edible materials which prevent leakage of non-digested liquid low-calorie fatty materials through the anal sphincter. Such AAL agents include fatty acids having a melting point of ca. 37°C (98.6°F) or higher, and partially- or fully-digestible natural or processed fats that yield such fatty acids in the gut; non-digestible polyol fatty acid polyesters which are solid at body temperature; and non-digestible sucrose fatty acid polyesters in which the fatty groups consist essentially of short chain fatty acid radicals containing from 2 to 10 carbon atoms and long chain fatty acid radicals containing from 20 to 24 carbon atoms, the molar ratio of short chain to long chain radicals being from about 5:3 to 3:5 and the degree of esterification being from about 7 to about 8.

By "liquid/solid stability" as used herein is meant that the liquid portion of the material does not readily separate from the solid portion at body temperature, i e., the material appears to be a solid even though up to about 95% of it is liquid. Liquid/solid stability is measured by centrifuging a sample of the material at 60,000 rpm for one hour at 37.8°C (100°F). Liquid/solid stability is defined as: 100% minus the percentage of the material that separated as a liquid after centrifuging.

By "adjuvant materials" as used herein is meant sodium or potassium nitrate, nitrite, phosphate, ascorbate, or erythrobate; vinegar, citric acid, and malic acid; glucono delta lactone; salt; sucrose, dextrose, lactose, and corn syrups or corn syrup solids; seasonings and flavor enhancers; cereal, starch, vegetable flour, soyflour; soy protein, nonfat milk, calcium-reduced non-fat milk, whey, sodium or calcium caseinate, egg albumin; dietary fiber; edible gums and hydrocolloids; vitamins and minerals.

"Lean meat" as used herein is defined as a lean to extra-lean animal protein source such as full-fat meats from which most or a substantial portion of the natural fat has been removed either by trimming away visible fat during commercial production (for example, extra-lean ground beef) or by other means such as solvent extraction; meats naturally low in fat such as chicken, turkey, or veal; and meat sources caused to be low in fat by special breeding, feeding, and/or hormone treatment of animals. Lean cuts of meat which are suitable for use as the animal protein source in the invention described herein are any of a wide variety of trimmed beef cuts which, composited, contain only about 6% tallow versus up to 30% tallow in regular ground beef and any of a wide variety of trimmed pork cuts, such as Boston butt, ham, loin, and picnic, which contain only about 6-12% lard versus up to 50% lard in regular pork sausage.

The term "animal protein from lean meat" as used herein is defined as the total protein, on a dry weight basis, contained in the lean meat utilized in the present invention.

"Tallow" as used herein is described as the body fat derived from cattle, goats, and sheep. "Lard" as used herein is defined as the body fat of swine. Both tallow and lard are characterized by a high content of $C_{16}$ and $C_{18}$ saturated fatty acids. The unsaturated fatty acids of lard and tallow are mostly oleic ($C_{18:1}$).

The lean meat is, then, derived from an animal source that has either been processed to contain a low concentration of body fat or is naturally possessed of a low concentration of body fat specifically from 0% to about 40%, preferably from 0% to about 20%, more preferably from 0% to about 10%, and most preferably from 0% to about 5%. The benefits of this invention increase directly with the leanness of the lean meat. This is because the less animal body fat remaining (tallow, lard, or poultry fat), the more may then be replaced with the fatty substance which contains the low-calorie fatty materials.

The preferred low-calorie fatty materials for use in the present invention are polyol fatty acid polyesters. The polyol of the polyester is preferably selected from the group consisting of sugars and sugar alcohols containing from 4 to 8 hydroxyl groups, glycerol, and polyglycerol containing from 5 to 15 glycerol moieties. Preferably, at least 85% of the hydroxyl groups of the polyol are esterified. When the polyol is a sugar, sugar alcohol, or polyglycerol, the fatty acid ester groups preferably have saturated or unsaturated alkyl groups consisting essentially of from about 8 to about 18 carbon atoms. When the polyol is glycerol, it is preferred that from about 40% to about 100% of the fatty acid ester groups have saturated alkyl ohains consisting essentially of 8 or 10 carbon atoms and the remaining fatty acid ester groups have saturated alkyl chains consisting essentially of 18 to about 24 carbon atoms.

The more preferred polyol low-calorie fatty materials for use in the present invention are those sugar, sugar alcohol, and polyglycerol fatty acid polyesters which (a) are solid or semi-solid at room temperature; (b) are liquid at body temperature and to which is added sufficient anti-anal leakage agent to present leakage of said liquid polyester through the anal sphincter; and/or (c) have, at 37.8°C (100°F): (1) a viscosity of at least about 15 poise, and most preferably at least about 30 poise, at a shear rate of 10 seconds$^{-1}$ after 10 minutes of steady shear and (2) a liquid/solid stability of at least about 50%, and most preferably at least about 80% to about 90%.

Highly preferred low-calorie fatty materials for use in the present invention are those sucrose fatty acid polyesters which (a) are solid or semi-solid at room temperature; (b) are liquid at body temperature and to which is added sufficient anti-anal leakage agent to prevent leakage of said liquid polyester through the anal sphincter; and/or (c) have, at 37.8°C (100°F): (1) a viscosity of at least about 30 poise at a shear rate of 10 seconds$^{-1}$ after 10 minutes of steady shear and (2) a liquid/solid stability of at least about 80% to about 90%.

Other highly preferred low-calorie fatty materials are those glycerol fatty acid polyesters in which from about 40% to about 100% of the fatty acid ester groups have saturated alkyl chains of 8 or 10 carbon atoms and any remaining ester groups consist essentially of about 18 to about 24 carbon atoms, wherein the said polyesters are solid or semi-solid at room temperature and have solidification points (titers) or melting points of from about 29.4°C (85°F) to about 46.1°C (115°F).

## Detailed Description of the Invention

The present invention comprises dietetic, comminuted meat products which exhibit as much as a 75% reduction in calories, a 95% reduction in animal fat and in saturated fat, and a 70% reduction in cholesterol, as compared to conventional fat-containing meats.

These products contain about the same level of animal protein, that is about 9% to about 30%, as conventional meat products, but have about 30% to about 100% of the regular amount of animal fat replaced with low-calorie fatty materials. Said dietetic meat products comprise from about 9% to about 30% of animal protein from lean meat; from about 10% to about 50% of a fatty substance which consists essentially of from about 30% to about 100% of low-calorie fatty materials, with the balance being added vegetable or animal fat or inherent animal fat from the lean meat; from about 25% to about 70% total water, inherent within the lean meat or added artificially to the composition; and from about 0% to about 10% of non-fatty materials associated with the protein source, such as minerals, or added adjuvant materials.

The inclusion of water in addition to that inherent within the lean meat tends to achieve dietetic meat products which have the consistency, processability, tenderness, juiciness, and full-fatty flavor of conventional meat products. However, the addition of water may cause a decrease in protein content because of the dilution effect of the added water on the overall composition. While this slight decrease in protein content may not be favored from a nutritional standpoint, it provides improved processability, improved palatability, and, because water is inexpensive and non-caloric, reduced cost and fewer calories.

It may also be desired to include from about 0.05% to about 5.00% of a binding agent in the dietetic meat product. This binding agent should replace a part of the lean meat base and may reduce the loss of the low-calorie fatty material and/or water during cooking, thus achieving even higher calorie and cost reduction. The binder could be chosen from a member of the group consisting of certain emulsifiers, fibers, gums, pectin, or the like, or mixtures thereof.

### Lean Meat Base for Use in Dietetic Meat Products

Many types of edible animal tissue or muscle protein may be successfully used as the lean meat source of animal protein for use in the present invention. Since a primary object of the invention is to simulate full-fat meat products while at the same time achieving a reduction in fat and calories, it is necessary, in order to realize meaningful benefits of the invention, to start with a lean meat protein base. Lean meat has less inherent natural body fat contained within it and, therefore, more of the low-calorie fatty materials can be used to replace the natural body fat that is found in conventional full-fat meat products. The lean meat base may be derived from a full-fat meat from which most or a substantial portion of the fat has been removed either by trimming away visible fat during commercial production (for example, extra-lean ground beef) or by other means such as solvent extraction; from meat sources naturally low in fat such as chicken, turkey, or veal; or from meat sources caused to be low in fat by special breeding, feeding, and/or hormone treatment of animals.

Suitable meat sources of animal protein are beef, pork, or poultry edible tissue or muscle protein, or any mixture thereof. Greater benefits are derived, however, when the natural fat of pork products (lard) or of beef products (tallow) is replaced with the fatty substance containing the low-calorie fatty materials of the present invention, since pork and beef products are of significantly higher total fat and saturated fat content than poultry products. The lean meat source of animal protein can be, therefore, edible animal muscle or tissue protein from any meat source, preferably pork or beef, which retains specifically from 0% to about 40%, preferably from about 0% to about 20%, more preferably from 0% to about 10%, and most preferably from 0% to about 5%, inherent natural body fat, and which contains from about 18% to about 30% protein. If the lean meat is dehydrated, e.g., by freeze drying, it will contain from about 30% to about 97% animal protein, with the balance being predominantly inherent body fat.

Many lean to extra-lean cuts of beef or pork are available and suitable for use in the present invention. Suitable trimmed meat cuts derived from beef include, but are not limited to, extra-lean ground beef, briskets (whole, flat half, and point half), chucks (arm pot roast and blade roast), flank, ribs (whole, eye, small end, large end, and shortribs), round (full, bottom, eye, tips, and top), shank cross-cuts, short loins (porterhouse steak, T-bone steak, tenderloin, and top loin), wedge-bone sirloin, and mixtures thereof. Because of the lower fat content, "good" grades of these cuts are preferable to "choice" and "prime" grades. Suitable meat cuts derived from pork include, but are not limited to, Boston butt, ham, loin, picnic, and mixtures thereof. In addition, trimmed meat cuts derived from beef or pork may be mixed together to form a suitable lean meat protein base.

### Preparation of Dietetic Meat Products

The dietetic meat products of the present invention are prepared by first adding, by blending manually or mechanically, from about 10% to about 50% of a fatty substance consisting essentially of from about 30% to about 100% of low-calorie fatty materials, the balance being added vegetable or animal fat or animal fat inherent from within the lean meat, to sufficient lean meat to give from about 9% to about 30% of animal protein. The lean meat specifically consists of from about 0% to about 40%, preferably from 0% to about 20%, more preferably from 0% to about 10%, and most preferably from 0% to about 5%, inherent natural fat and from about 18% to about 30% protein. If the lean meat is dehydrated, it contains from about 30% to about

5

97% animal protein and is reconsitituted by hydrating with water before use in this invention.

It is preferred to first melt the fatty substance. If the fatty substance consists of vegetable fat, added animal fat, and/or low-calorie fatty materials which are solid or semi-solid at room temperature, these components can be melted separately and then blended together or melted and blended simultaneously. The liquid fatty substance is added dropwise or incrementally to the lean meat, which is preferably used at the temperature at which it is stored, usually at about 4.4°C (40°F).

To the mixture of fatty substance and lean meat, water may be added, if necessary or desired, (by blending manually or mechanically), to give from about 25% to about 70% total water in the product. In other words, the amount of water in the finished product may consist solely of that inherent within the lean meat or it may consist of water inherent in the lean meat plus water added into the composition. Adjuvant materials may also be added, separately or with any added water, by blending manually or mechanically into the mixture, such that the total amount of added adjuvant materials plus non-fatty materials inherent within the lean meat, such as minerals, is no more than about 10%. It is preferable to control the temperature to below about 15.6°C (60°F) during mixing; this may be facilitated by using the meat at the temperature at which it is stored, usually about 4.4°C (40°F), by the application of external cooling, and/or, if water is added, having the water at a temperature below about 15.6°C (60°F).

Next, the blended mixture is preferably passed through a meat grinder, usually at least twice, or through a meat grinder and chopper or colloid mill, until a homogeneously-appearing product is obtained.

If it is desired to add water and/or adjuvant materials to the composition, the water, preferably cold tap water and/or comminuted ice, and/or the adjuvant materials are added before the final grinding or chopping steps as described above. The added water or ice serves to control the temperature during mixing to below about 15.6°C (60°F) and to improve the consistency, processability, economy, or palatability of the dietetic meat product.

Cooked dietetic ground beef having at least one-third fewer calories than regular ground beef prepared in the same manner will, in general, be produced by cooking raw dietetic ground beef comprising:

(a) from about 13% to about 21% of animal protein from lean beef;

(b) from about 13% to about 42% of a fatty substance consisting essentially of from about 50% to about 100% of low-calorie fatty materials, with the balance being animal fat or vegetable fat;

(c) from about 40% to about 70% water; and

(d) from about 1% to about 3% non-fatty materials associated with the animal protein, such as minerals, or added adjuvant materials.

The cooked dietetic ground beef having at least one-third fewer calories than regular ground beef prepared in the same manner will, in general, have the following composition:

(a) from about 19% to about 27% of animal protein from lean beef;

(b) from about 12% to about 25% of a fatty substance consisting essentially of from about 50% to about 100% of low-calorie fatty materials, with the balance being animal fat or vegetable fat;

(c) from about 50% to about 65% water; and

(d) from about 1% to about 3% non-fatty materials associated with the animal protein, such as minerals, or added adjuvant materials.

In order to make reduced-calorie/reduced-animal fat ground beef having the juiciness of full-fat ground beef, raw, extra-lean ground beef is prepared by grinding well-trimmed, "good", full-cut round of beef, containing from about 3% to about 6% tallow and about 22% protein, and is used as the lean animal protein base.

Sufficiently lean protein base is used to provide the desired level of animal protein in the dietetic ground beef. Since regular ground beef is comprised of about 17% protein, about 76% of the lean protein base is used. In order to approximate the level of inherent fat present in regular ground beef (about 27%), about 24% of non-digestible low-calorie fatty material is added, giving a total of about 27% fatty substance in the composition, since about 3% tallow is contributed by the lean protein base. The low-calorie fatty material is melted and/or added dropwise or incrementally as a liquid to the lean protein base having a temperature of about 4.4°C (40°F). Subjecting the composition to mechanical or manual mixing while adding the low-calorie fatty material dropwise or incrementally ensures uniform distribution throughout the lean protein base. External cooling is applied if needed to keep the temperature of the mixture below about 15.6°C (60°F). The blended mixture is then passed through a meat grinder twice, or once if water is to be added.

If desired, 20% cold tap water is blended into the ground mixture of lean protein base and low-calorie fatty material by manual or mechanical mixing. The added water renders the total water content about 62%, consisting of about 17% from added water and about 45% from water inherent within the lean meat, and dilutes the composition to about 14% protein, about 3% tallow, and about 20% low-calorie fatty material. After the addition of water, the mixture is passed through a meat grinder again.

The resulting dietetic ground beef is either used as regular ground beef is used, or is formed either manually or mechanically into dietetic hamburger patties which are either cooked directly or after refrigeration or freezing. All methods of cooking regular hamburgers are also suitable for cooking the dietetic hamburgers.

The cooked dietetic hamburger patties prepared without added water have similar appearance, texture, and flavor to cooked regular hamburgers. Both moisture and fat are reduced during cooking just as with regular ground beef. Importantly, however, cooking yields are similar to those for regular ground beef, and the relative amounts of tallow and low-calorie fatty materials are not changed significantly during cooking. Compared to cooked regular hamburgers, the cooked dietetic hamburgers contain about the same levels of moisture and animal protein and contain about 90% less animal fat, about 90% less saturated fat, about 50% less cholesterol, and about 60% fewer calories.

The cooked dietetic hamburger patties prepared with added water have not only the appearance, texture, and flavor, but also the juiciness and tenderness of cooked regular hamburgers. Because of the added water, extra moisture is retained by the cooked patties which, together with the retained low-calorie fatty material, contributes to their tenderness and juiciness. Compared to cooked regular hamburgers, the cooked dietetic hamburgers contain about 20% less animal protein, about 90% less animal fat, about 90% less saturated fat, about 55% less cholesterol, and about 65% fewer calories.

Smaller reductions in saturated fat and calories would be achieved if the fatty substance contained, instead of non-digestible low-calorie fatty materials, added vegetable or animal fat or low-calorie fatty materials which are partially digestible or only somewhat lower in net caloric efficiency than animal fat.

The lean animal protein base used to prepare dietetic meat products may be derived from many different meat sources. However, the benefit of the invention rises with increasing leanness of the meat used. The less of the inherent body fat retained in the animal protein source, the more of the fatty substance which contains the low-calorie fatty materials may be used when replacing the fat conventionally present in the full-fat meat products. At least about 30% of the fatty substance added to the lean protein base should be low-calorie fatty materials in order to provide meaningful dietetic benefits; the balance of the fatty substance may be a vegetable or animal fat, such as deodorized fish oil, which preferably is high in mono- and/or polyunsaturated fatty acids for added health benefits over conventional animal fat.

Dietetic, comminuted meat products other than ground beef and hamburger patties may be prepared by using other lean animal protein bases, particularly those derived from pork. Sausages are the broad class of meat products prepared from comminuted and seasoned meats and include meat products such as pork sausage (loose or cased, breakfast style or country style) hot dogs (wieners), frankfurters, metts, bratwurst, knockwurst, bockwurst, bologna, summer sausage, braunschweiger, liver sausages, luncheon meats, boiled ham, minced ham, dutch loaf, salami, Polish-style sausage, chopped pork and beef, and meat loaf. The preparation of dietetic sausages follows the normal preparation methods for the full-fat meat products, requiring the addition of up to about 10% of adjuvant materials, except that, in place of the regular meats used, lean meat, as previously described, and a fatty substance containing low-calorie fatty materials are added. In addition, the dietetic meat products may be processed in a myriad of final forms in accordance with their desired uses. They may be prepared in chunks or pieces for use in soups, sauces, and the like. They may be precooked, frozen, freeze-dried, canned, packaged in retortable pouches, or combinations of these. They may also be formed into portions and sold to the consumer who may then formulate them into the shape most suitable for his or her needs.

Cooked dietetic sausages having at least 33% fewer calories than regular sausages prepared in the same manner will, in general, consist of:

(a) from about 12% to about 24% of animal protein from lean beef, pork, or veal;

(b) from about 17% to about 44% of a fatty substance consisting essentially of from about 30% to about 100% of low-calorie fatty materials, with the balance being animal fat or vegetable fat;

(c) from about 51% to about 66% water; and

(d) from about 3% to about 8% non-fatty materials associated with the animal protein, such as minerals, or added adjuvant materials.

## Fatty Substances for Use in Dietetic Meat Products

The dietetic meat products of the present invention have about 30% to about 100% of the regular amount of animal fat replaced with a fatty substance containing low-calorie fatty materials. The fatty substance as used herein consists essentially of from about 30% to about 100% of low-calorie fatty materials, with the balance being added conventional vegetable or animal fat or inherent animal fat from lean meat. If vegetable or animal fat is used in the fatty substance, it is preferable to use vegetable or animal fats which are solid or semi-solid at room temperature like the inherent animal fat being replaced. It is also preferable to use a vegetable fat or an animal fat, e.g., deodorized fish oil, which is high in mono- and/or polyunsaturated fatty acids for added health benefits. For optimum flavor in the dietetic meat products, the low-calorie fatty materials and the vegetable or animal fat, if used, should be freshly deodorized, a common practice in edible vegetable shortening and oil production, just prior to incorporation into the dietetic meat product composition. The low-calorie fatty materials to be utilized in the fatty substance are described herein immediately below:

## Low-Calorie Fatty Materials

The low-calorie fatty materials used in this invention are edible materials which can replace the regular triglyceride fat present in conventional meat products. These materials provide the benefits of animal fat, such as consistency, tenderness, lubricity, juiciness, and flavor, yet do not add as many calories because they are non-digestible, partially digestible, or are lower in net caloric efficiency compared to animal fat.

Many classes of low-calorie fatty materials are suitable for use in the present invention. These fatty moieties typically have carbon chain lengths of 8-24 carbon atoms. Examples of such materials are: fatty alcohol esters of polycarboxylic acids (U.S. Patent 4,508,746 of Hamm, assigned to CPC International, Inc., issued April 2, 1985); fatty polyethers of polyglycerol (U.S. Patent 3,932,532 of Hunter et al., assigned to ICI United States,

7

Inc., issued January 13, 1976) (food use disclosed in German Patent 207,070, issued February 15, 1984)); ethers and ether-esters of polyols containing the neopentyl moiety (U.S. Patent 2,962,419 of Minich, issued November 29, 1960); fatty alcohol diesters of dicarboxylic acids such as malonic and succinic acid (U.S. Patent 4,582,927 of Fulcher, assigned to Frito-Lay, Inc., issued April 15, 1986) ; triglyceride esters of alpha branched chain-alkyl carboxylic acids (U.S. Patent 3,579,548 of Whyte, assigned to The Procter & Gamble Co., issued May 18, 1971); and sugar and sugar alcohol fatty acid polyesters (U.S. Patent 3,600,186 of Mattson and Volpenhein, assigned to Procter & Gamble, issued August 17, 1971), all incorporated herein by reference.

However, for reasons of cost efficiency, consumer acceptability, and assurance of inherent safety, the preferred class of low-calorie fatty materials is polyol fatty acid polyesters which comprise sugar fatty acid polyesters, sugar alcohol fatty acid polyesters, glycerol fatty acid polyesters, polyglycerol fatty acid polyesters, and mixtures thereof.

## A. Sugar, Sugar Alcohol or Polyglycerol Fatty Acid Polyesters

Sugar, sugar alcohol, or polyglycerol fatty acid polyesters are among the preferred low-calorie fatty materials for use in the present invention and comprise fatty acids and sugars, sugar alcohols, or polyglycerol as polyols. The term "sugar" is used herein in its conventional sense as generic to mono-and disaccharides. The term "sugar alcohol" is likewise used in its conventional sense as generic to the reduction product of sugars wherein the aldehyde or ketone group has been reduced to an alcohol. The term "polyglycerol" is used to describe mixtures of ethers of glycerol with itself, ranging from 2 to 30 glycerol units per molecule. Polyglycerol is prepared by polymerization of glycerol in the presence of either acid or base with the removal of water during reaction. For example, the synthesis described in U.S. Patent 3,968,169 of Seiden and Martin, (assigned to The Procter & Gamble Company), issued July 6, 1976, is suitable and is incorporated by reference herein. Polyglycerol can be fractionated by methods known in the art, such as molecular distillation, to give specific polymer ranges. The polyol ester compounds are prepared by reacting a monosaccharide, disaccharide, sugar alcohol, or polyglycerol with such fatty acids as will be disclosed herein. Preferred monosaccharides, disaccharides, and sugar alcohols contain 4 to 8 hydroxyl groups. Preferred polyglycerol contains predominantly about 5 to about 15, and more preferably about 6 to about 10, etherified glycerol units.

Examples of suitable monosaccharides are those containing 4 hydroxyl groups such as xylose, arabinose and ribose; the sugar alcohol derived from xylose, i.e., xylitol, is likewise suitable. The monosaccharide erythrose is not suitable for use in the low calorie fat materials of the present invention since it only contains 3 hydroxyl groups; however, the sugar alcohol derived from erythrose, i.e., erythritol, contains 4 hydroxyl groups and is thus suitable. Among 5 hydroxyl-containing monosaccharides that are suitable for use herein are glucose, mannose, galactose, fructose, and sorbose. A sugar alcohol derived from sucrose, glucose, or sorbose, e g., sorbitol, contains 6 hydroxyl groups and is also suitable as the alcohol moiety of the fatty acid ester compound. Examples of suitable disaccharides are maltose, lactose, and sucrose, all of which contain 8 hydroxyl groups.

In preparing the sugar, sugar alcohol, or polyglycerol fatty acid polyesters, a sugar, sugar alcohol, or polyglycerol, such as those identified immediately above, must be esterified with mixtures of fatty acids having from about 8 to about 24, preferably from about 8 to about 18, carbon atoms. The fatty acids can be derived from suitable or naturally occurring or synthetic fatty acids and can be saturated or unsaturated, including positional and geometric isomers. Examples of such fatty acids are caprylic, capric, lauric, myristic, myristoleic, palmitic, palmitoleic, stearic, oleic, elaidic, ricinoleic, linoleic, linolenic, eleostearic, arachidic, behenic, erucic, and brassidic. The low-calorie fatty materials preferred for use in the dietetic meat products of the present invention are mixed esters of fatty acids, rather than esters of a single type of fatty acid.

Fatty acids per se or naturally occurring fats and oils can serve as the source for the fatty acid component in the sugar, sugar alcohol, or polyglycerol fatty acid ester. For example, rapeseed oil provides a good source of $C_{22}$ fatty acid, while $C_{16}$-$C_{18}$ fatty acids can be provided by tallow, soybean oil, palm oil, or cottonseed oil. Shorter chain fatty acids can be provided by coconut, palm kernel, or babassu oils. Corn oil, lard, olive oil, peanut oil, safflower seed oil, sesame seed oil, and sunflower seed oil are examples of other natural oils which can serve as the source of the fatty acid component.

Sugar, sugar alcohol, or polyglycerol fatty acid polyesters suitable for use herein can be prepared by a variety of methods known to those skilled in the art. These methods include, for example, transesterification of the polyol with methyl, ethyl, or glycerol fatty acid esters using a variety of catalysts; acylation of the polyol with a fatty acid anhydride; and acylation of the polyol with a fatty acid, per se. Polyol polyesters, their use as substitutes, and their preparation are described in detail in the following U.S. Patents, all assigned to The Procter & Gamble Company, and all incorporated by reference herein: 4,034,083 to Mattson, issued July 5, 1977; 3,963,699 to Rizzi, issued June 15, 1976; 4,518,772 issued May 21, 1985, and 4,517,360 issued May 14, 1985, both to Volpenhein; and 3,968,169 to Seiden and Martin, issued July 6, 1976.

A characterizing feature of the sugar or sugar alcohol fatty acid polyesters useful in this invention is that they predominantly contain at least 4 fatty acid polyester groups and have at least 75%, preferably at least 85%, of their hydroxyl groups esterified with fatty acids. Sugar or sugar alcohol fatty acid polyester compounds that contain 3 or less fatty acid ester groups are digested in the intestinal tract much in the same manner as ordinary triglyceride fats, but sugar or sugar alcohol fatty acid polyester compounds that contain four or more fatty acid ester groups are digested to a lesser extent, or not at all, and thus have the desired low-calorie properties for use in this invention.

A characterizing feature of the polyglycerol fatty acid polyesters useful in this invention is that they predominantly contain at least 5 etherified glycerol units, and have at least 75%, preferably at least 85%, of their hydroxyl groups esterified with fatty acids. Polyglycerol fatty acid polyester compounds that contain 3 or less etherified glycerol units are digested, absorbed, and metabolized much in the same manner as ordinary triglyceride fats, but polyglycerol fatty acid polyester compounds that contain 5 or more etherified glycerol units are digested, absorbed, and metabolized to a lesser extent, or not at all, and thus have the desired low-calorie properties for use in this invention.

The sugar, sugar alcohol, and polyglycerol polyesters exist at room temperature in solid, semi-solid, or liquid forms, depending upon their particular polyol and fatty acid compositions. Either the solid form, semi-solid form, or liquid form may be incorporated satisfactorily in the dietetic meat products of the present invention. It is preferable, however, to use the solid or semi-solid form, rather than the liquid form, because higher levels can be incorporated without adversely affecting the consistency or taste of the dietetic meat products. This is because the inherent body fat being replaced in full-fat meats is solid or semi-solid at room temperature; e.g., tallow, lard, and poultry fat have fatty acid titers (solidification points) ranging from about 29.4°C (85°F) to about 46.1°C (115°F).

As is known and explained in U.S. Patent 4,005,195 of Jandacek, (assigned to The Procter & Gamble Company), issued January 25, 1977, incorporated by reference herein, regular ingestion of moderate to high levels of polyol fatty acid polyesters which are liquid at body temperature can produce an undesirable "laxative" effect, namely, leakage of the ester through the anal sphincter. Ways to prevent this undesirable laxative side effect accompanying polyesters which are liquid at body temperature are obviously preferred.

One means of preventing the undesirable laxative effect is through the addition to polyol polyesters which are liquid at body temperature of at least about 10% by weight of an anti-anal leakage (hereinafter AAL) agent such as those described in U.S. Patent 4,005,195 Jandacek (assigned to Procter & Gamble), issued January 25, 1977, incorporated by reference herein.

One class of AAL agents includes fatty acids having a melting point of ca. 37°C (98.6°F) or higher, and ingestible, partially- or fully-digestible sources of such fatty acids. The fatty acid AAL agents include, for example, the $C_{12}$-$C_{24}$ saturated fatty acids, and trans-isomers of $C_{12}$-$C_{24}$ unsaturated fatty acids such as elaidic acid and brassidic acid, and ingestible, fully- or partially-digestible sources thereof.

Non-limiting examples of fatty acids and sources thereof which can be used as the AAL agent herein include the free fatty acids per se, compounds such as esters (e.g., triglycerides) that yield such fatty acids on hydrolysis in the gut, soaps of the fatty acids such as the sodium, potassium, etc., water-soluble soaps, as well as the calcium and magnesium water-insoluble soaps. Highly preferred herein for their AAL effect are the $C_{16}$-$C_{22}$, saturated or trans-unsaturated fatty acids, or edible sources thereof.

Specific examples of materials useful as the foregoing type of AAL agent herein include natural or processed fats yielding $C_{12}$-$C_{24}$ saturated fatty acids in the gut, e.g., materials such as cocoa butter, palm oil, palm kernal oil, coconut oil, tallow, lard, enriched concentrates of triglycerides having high levels of saturated fatty acids obtainable from these sources and sources such as highly saturated cottonseed oil or palm oil fractions obtained by processes such as crystallization or directed rearrangement which yield the desired higher concentrations of the more saturated fatty acids in the resulting "hardstock" fractions. Such materials are all available by well-known processes.

Partially hydrogenated or elaidinized oil, including all of the above, as well as partially hydrogenated or elaidinized olive oil, soybean oil, sunflower seed oil, safflower seed oil, rapeseed oil, or such materials which are hydrogenated or elaidinized and concentrated, for example by crystallization, to provide fractions which are enriched in sources of the longer-chain, substantially saturated or trans-unsaturated fatty acids, are all useful as an AAL agent herein.

Of course, any of the foregoing unsaturated oils are useful herein after they either have been substantially completely hydrogenated to convert the unsaturated fatty acid ester groups to the corresponding saturated fatty acids or have been substantially completely elaidinized to convert the unsaturated fatty acid ester groups from the geometric cis- to the corresponding trans- form.

Synthetic materials, especially fatty acid esters made from the $C_{12}$-$C_{24}$, most preferably $C_{16}$-$C_{22}$, saturated or trans-unsaturated fatty acids are useful as AAL agents. Such materials include the esters of tetrahydric alcohols such as erythritol, esters of pentahydric alcohols such as xylitol, and erythritol, and esters of hexahydric alcohols such as sorbitol, and the like.

The $C_{12}$-$C_{24}$ saturated or trans-unsaturated fatty acid esters of monohydric alcohols such as methyl, ethyl, and propyl alcohols (preferably ethyl alcohol) are also useful as AAL agents. Esters of dihydric alcohols such as 1,2-propanediol, 1,3-butanediol, and the like, can also be satisfactory.

Highly preferred AAL agents herein which yield the foregoing fatty acids on hydrolysis in the gut are those which, in combination with the liquid polyesters herein, provide compositions having aesthetically pleasing organoleptic qualities, i.e., better "mouth feel." Such aesthetically pleasing materials include naturally occurring cocoa butter and various synthetic cocoa and confectionery butters. These preferred AAL agents include, for example, the so-called "position-specific" triglycerides such as 1-stearoyl diolein (SOO); 2-oleoyl-1,3-distearin (SOS); or the corresponding compounds where in the stearoyl group is replaced by palmitoyl, arachidoyl, or behenoyl groups. Another class of aesthetically preferred anti-laxative agent, consists of 1-oleoyl distearin (OSS), 1-palmitoyl distearin (PSS), 1-arachidoyl distearin (ASS) and 1-behenoyl distearin (BSS).

These highly preferred position-specific triglycerides which can be used as a fatty acid source type of AAL agent as described herein can be prepared according to the methods described in US. Patent 3,809,711 of Yetter (assigned to The Procter & Gamble Company), issued May 7, 1974, the disclosure of which is incorporated herein by reference.

Another highly preferred kind of AAL agent for addition to polyesters which by themselves are liquid at body temperature, is an edible, non-digestible sugar or sugar alcohol fatty acid polyester of the type described hereinabove, which is solid at body temperature, i.e., has a melting point above 37°C (98.6°F). In general, the solid polyesters are esterified with a higher proportion of saturated and trans-unsaturated fatty acids and a lower proportion of cis-unsaturated fatty acids.

Typical examples of edible, solid, non-absorbable, non-digestible sugar or sugar alcohol polyester AAL agents herein include sucrose octastearate, sucrose octaelaidate, sucrose octapalmitate, sucrose heptastearate, xylitol pentastearate, galactose pentapalmitate, and the like, saturated and trans-unsaturated sugar alcohol polyesters having at least four hydroxyl groups esterified with $C_{10}$-$C_{22}$ fatty acids, and mixtures thereof.

Another highly preferred kind of AAL agent for use with sugar or sugar alcohol fatty acid polyesters which by themselves are liquid at body temperature, i.e., have a melting point below 37°C (98.6°F), comprises edible, non-digestible sucrose fatty acid polyesters in which the fatty groups consist essentially of short chain fatty acid radicals containing from about 2 to about 10 carbon atoms and long chain fatty acid radicals containing from about 20 to 24 carbon atoms, the molar ratio of short chain to long chain radicals being from about 5:3 to about 3:5 and the degree of esterification being from about 7 to about 8. These compounds can be made by a variety of methods known to those skilled in the art such as those methods cited hereinabove. When using the methyl ester route for preparing these compounds, the octaester of the short chain fatty acid is prepared first, then this product is partially interesterified with the methyl ester of the long chain fatty acid in order to obtain the sucrose ester of the mixed short chain/long chain fatty acids. These compounds are solid at temperatures below about 40°C (104°F). They have the ability to trap large amounts of liquid oil within their crystal structure, and as a consequence, can be blended in relatively small amounts (on the order of about 10% to about 20%) with liquid oils to convert the oils to compositions which remain solid or semi-solid at temperatures below about 40°C (104°F).

Another type of edible AAL agent comprises fatty acid esters which are non-digestible by virtue of branching on the alpha-carbon atom of the fatty acid moiety. Such materials, which are well known in the chemical arts, include, for example, alpha-methyl and alpha, alpha-dimethyl $C_{10}$-$C_{18}$ fatty acid esters of lower alcohols such as ethanol and of polyols such as glycerol.

Viscosity is a well known rheological property and can be measured by use of an instrument such as a plate and cone viscometer (e.g., a Ferranti-Shirley viscometer, manufactured by Ferranti Electric, Inc., 87 Modular Ave., Commack, NY 11725). The basics of rheology are discussed in Idson, "Rheology: Fundamental Concepts", Cosmetics and Toiletries, Vol. 93, pp. 23-30 (July 1978), incorporated herein by reference. "Viscosity" is a measure of the internal friction resisting the movement of each layer of fluid as it moves past an adjacent layer of fluid.

To measure viscosity of a sample of the low-calorie fatty materials for use in this invention, a plate and cone viscometer is used to record a rheogram, which is a plot of shear stress versus time at a fixed shear rate. Viscosity is calculated from the shear stress shown on the rheogram curve after so many minutes of steady shear. These measurements are described in more detail herein in the Analytical methods section below.

Analytical Methods

1. Rheology Measurements

a. Sample Preparation

The polyol polyester is heated until it completely melts and is thoroughly mixed. Ten grams of the melted sample is weighed into a pre-heated 20 ml glass vial. The sample is then allowed to recrystallize at 37.8°C ± 3°C (100°F ± 5°F) for 24 hours. After the 24 hour time period has elapsed, the sample is taken to the viscometer and the viscosity is measured.

b. Ferranti-Shirley Viscometer Operation Procedure

A Ferranti-Shirley viscometer is used for the viscosity measurements of the polyol polyester. A cone is put into place, and the viscometer temperature is adjusted to 37.8°C (100°F) The chart recorder is calibrated to read shear stress at 10 seconds$^{-1}$, and the gap between the cone and plate is set. The cone speed is checked, and the cone and plate temperatures are equilibrated to 37.8°C (100°F). The panel controls are set. Sufficient sample is placed between the plate and the cone so that the gap is completely filled. The temperature is allowed to stabilize at 37.8°C (100°F) for about 30 seconds. The test is started by selecting the RPM for the 10 seconds$^{-1}$ shear rate and recording on the strip chart recorder. The shear stress is allowed to reach maximum value, and the shear stress after 10 minutes of steady shear at 10 seconds$^{-1}$ is noted from the rheogram. Viscosity (poise) equals shear stress (dynes/cm$^2$) divided by shear rate (10 seconds$^{-1}$).

## 2. Liquid/Solid Stability Measurement:

The polyol polyester sample is heated until it completely melts and is thoroughly mixed. The sample is then poured into Beckman #344062 4.4 ml. centrifuge - tubes. The tubes are immediately transferred to a 37.8°C ± 3°C (100°F ± 5°F) constant temperature room and allowed to recrystallize undisturbed for 24 hours. The samples are then centrifuged at 60,000 rpm for one hour at 37.8°C (100°F) (the centrifuge and centrifuge head are previously equilibrated at 37.8°C [100°F]). The force on the samples is 486,000 G's. The liquid/solid stability is then calculated as follows:

$$\text{Liquid/Solid Stability} = \frac{100 \times (\text{Total volume of sample} - \text{Volume of liquid})}{\text{Total volume of sample}}$$

## 3. Solid Fat Content

The method for determining Solid Fat Content (SFC) values of a fat by PMR is described in Madison and Hill, J. Amer. Oil. Chem. Soc., Vol. 55 (1978), pp. 328-31, herein incorporated by reference. Measurement of SFC by PNMR is also described in A.O.C.S. Official Method Cd. 16-81, Official Methods and Recommended Practices of the American Oil Chemists Society, Third Edition, 1987, (herein incorporated by reference). Before determining SFC values, the sample is heated to a temperature of 60°C (140°F) for at least 0.5 hour or until the sample is completely melted. The melted sample is then tempered at a temperature of 0°C (32°F) for 15 minutes, 27°C (80°F) for 30 minutes, and 0°C (32°F) for 15 minutes. After tempering, the SFC values of the sample at temperatures of 10°C (50°F), 21°C (70°F), 27°C (80°F), 33°C (92°F) and 41°C (105°F) are determined by pulsed magnetic resonance (PMR) after equilibrating for 30 minutes at each temperature.

The Solid Fat Content value (SFC) provides a reasonable approximation of the percent by weight solids of a particular fatty material at a given temperature. The low-calorie fatty materials preferably have a Solid Fat Content at 37.8°C (100°F) of at least 5%. Most preferably, the Solid Fat Content at 37.8°C (100°F) is at least about 10%. The low-calorie fatty materials preferably have a complete melting point higher than about 37°C (98.6°F).

The more preferred low-calorie fatty materials for use in the dietetic meat products of the present invention are those sugar, sugar alcohol, or polyglycerol fatty acid polyesters which do not produce an undesirable laxative effect and, therefore, do not require the use of added AAL agents. In particular, at 37.8°C (100°F), the fatty materials have: (a) a viscosity of at least about 15 poise at a shear rate of 10 seconds$^{-1}$ after 10 minutes of steady shear and (b) a liquid/solid stability of at least about 50%.

These more preferred low-calorie fatty materials exhibit very high viscosity and excellent liquid/solid stability at body temperature. For example, specially synthesized intermediate melting sucrose fatty acid polyesters which are 12% solid and 88% liquid at body temperature exhibit non-Newtonian psuedoplastic flow properties, are very viscous, and have excellent liquid/solid stability. This is in contrast to the properties of a mixture containing 88% of a liquid sucrose polyester and 12% of a solid sucrose polyester. At body temperature the mixture of 12% solid sucrose polyester and 88% liquid sucrose polyester separates into liquid and solid portions. Additionally, the mixture has a low viscosity. The specially synthesized sucrose polyesters, on the other hand, exhibit psuedoplastic flow and surprising viscosity and liquid/solid stability at relatively low levels of solids.

By being highly viscous and exhibiting significant liquid/solid stability, these low-calorie fatty materials may be ingested without resulting in an undesirable laxative side effect. Being viscous and stable, the materials pass from the digestive tract through the anal sphincter in much the same manner as normal feces. Hence, these materials can be safety ingested without adding AAL agents.

Another benefit accrues from the fact that these highly viscous, liquid/solid stable low-calorie fatty materials are able to retain their high viscosity and stability at relatively low solids content levels. When these dietetic meat products containing compositions are ingested, less solids are perceived in the mouth, therefore giving a less waxy taste impression.

The most preferred sugar, sugar alcohol, or polyglycerol fatty acid polyesters for use in the dietetic meat products of the present invention minimize any undesirable laxative effect even at relatively high levels of ingestion by having, at 37.8°C (100°F), a viscosity of at least about 30 poise at a shear rate of 10 seconds$^{-1}$ after 10 minutes of steady shear. These compositions also preferably have a liquid/solid stability of at least about 80%, and most preferably at least about 90%.

Highly preferred low-calorie fatty materials for use in the dietetic meat products of this invention are sucrose fatty acid polyesters. Preferred sucrose fatty acid polyesters have the majority of their hydroxyl groups esterified with fatty acids. Preferably, at least about 85%, and most preferably about 95%, of the sucrose polyesters are selected from the group consisting of octaesters, heptaesters, and hexaesters, and mixtures thereof. Preferably, no more than about 35% of the esters are hexaesters or heptaesters, and at least about 60% of the sucrose polyesters are octaesters. Most preferably, at least about 70% of the polyesters are octaesters. It is also most preferred that the polyesters have a total content of penta- and lower esters of not more than 3%.

In the following listings of fatty acid moieties, the common name of the fatty acid is given following its $C_{x:y}$ designation, wherein x is the number of carbon atoms and y is the number of double bonds.

In order to provide the most desirable physical properties, the sucrose polyesters are preferably esterified with particular kinds of fatty acids. Preferably, at least about 80%, and, most preferably, at least 90%, of the fatty acids are selected from the group consisting of $C_{16:0}$, $C_{18:0}$, $C_{18:1}$, $C_{18:2}$, $C_{22:0}$, $C_{22:1}$, their geometric and positional isomers, and mixtures thereof. Iodine Value is a measure of the degree of unsaturation of fatty acids. The sucrose polyesters preferably have an Iodine Value of from about 36 to about 55.

More specifically, the following is a preferred fatty acid composition for the sucrose polyesters: from about 9% to about 12% $C_{16:0}$; from about 35% to about 53% $C_{18:0}$; from about 19% to about 43% $C_{18:1}$; from about 2% to about 17% $C_{18:2}$; from about 0% to about 2% $C_{18:3}$; from about 0% to about 2% $C_{20:0}$; from about 0% to about 10% $C_{22:0}$; and from about 0% to about 2% $C_{22:1}$.

## B. Glycerol Fatty Acid Polyesters Containing Medium Chain or Medium and Long Chain Fatty Acids

Glycerol fatty acid polyesters containing medium chain or medium chain and long chain fatty acids are among the preferred low-calorie fatty materials for use in the present invention and comprise glycerol having at least 75%, and preferably at least 85%, of its hydroxyl groups esterified such that from about 40% to about 100% of the fatty ester groups have saturated alkyl chains consisting essentially of medium chain fatty acids, preferably those with 8 or 10 carbon atoms, and the remaining fatty acid ester groups have saturated alkyl chains consisting essentially of long chain fatty acids, preferably those with 18 to about 24 carbon atoms. These glycerol polyesters can provide the physical and gustatory benefits of animal fats, yet are lower in calories than animal fat.

By "medium chain fatty acids", as used herein, is meant $C_{6:0}$ (caproic), $C_{8:0}$ (caprylic), or $C_{10:0}$ (capric) fatty acids, or mixtures thereof. Although the $C_{7:0}$ (enanthic) and $C_{9:0}$ (pelargonic) fatty acids are not commonly found, they are likewise included in the possible medium chain fatty acids. The present medium chain fatty acids do not include $C_{12:0}$ (lauric acid), sometimes referred to in the art as a medium chain fatty acid.

By "long chain fatty acids" as used herein, is meant $C_{17:0}$ (margaric), $C_{18:0}$ (stearic), $C_{19:0}$ (nonadecanoic), $C_{20:0}$ (arachidic), $C_{21:0}$ (heneicosanoic), $C_{22:0}$ (behenic), $C_{23:0}$ (tricosanoic), $C_{24:0}$ (lignoceric), $C_{25:0}$ (pentacosanoic), or $C_{26:0}$ (cerotic) fatty acids, or mixtures thereof.

The physical and gustatory benefits of fats are achieved by tailoring the glycerol polyester composition to give the desired melting characteristics. Compositions which are solid or semi-solid at room temperature and have a melting point or solidification point (titer) of from about 29.4°C (85°F) to about 46.1°C (115°F) are highly preferred low-calorie fatty materials for purposes of this invention. A number of glycerol polyester compositions are suitable and can be obtained by varying the proportions of the specific saturated medium chain fatty acids and by varying the proportions of molecules having 0 to 3 long chain fatty acid ester groups. For example, increasing the ratio of $C_{8:0}$ to $C_{10:0}$ will lower the melting point, and increasing the number of saturated long chain ester groups per molecule will raise the melting point.

A highly preferred glycerol polyester contains predominantly $C_{10:0}$ fatty acids, preferably at least about 80%, and is a solid at room temperature and melts at about 32°C (89. 6°F) Glycerol polyesters comprised of greater than about 80% of their molecules having one long chain fatty acid ester group and two medium chain fatty acid ester groups are also highly preferred. One example is comprised of about 90% monolong, about 7% dilong, about 0% trilong, and about 3% trimedium chain molecules with an overall fatty acid composition of about 26% $C_{8:0}$, about 23% $C_{10:0}$, about 9% $C_{18:0}$, about 1% $C_{20:0}$, about 40% $C_{22:0}$, and about 1% $C_{24:0}$. This glycerol polyester is semi-solid at room temperature and has a solidification (titer) range of about 31°C (87.8°F) to about 38°C (100.4°F). Another example is a glycerol polyester comprised of about 100% monolong molecules with an overall fatty acid composition of about 46% $C_8$ and about 54% $C_{22}$. This glycerol polyester is solid at room temperature and has a melting point of about 38.0°C (100.4°F).

These glycerol polyesters achieve their reduction in calories because of their very different fatty acid compositions as compared to animal fats. Animal fats consist predominately of $C_{16:0}$, $C_{18:0}$, $C_{18:1}$, and $C_{18:2}$ fatty acids which, together with the glycerol backbone, supply about 9 kilocalories of energy to the body per 1 gram of animal fat ingested. The subject glycerol polyesters consist essentially of (1) $C_{8:0}$ and $C_{10:0}$ fatty acid moities, which, although more easily digested and absorbed, are less efficiently metabolized, utilized, and stored by the body (that is, have lower net caloric efficiency than long chain fatty acids), and (2) saturated $C_{18:0}$ to $C_{24:0}$ fatty acid moieties which are more poorly absorbed and are, therefore, excreted to a greater extent by the body.

In preparing the subject glycerol polyesters which are low-calorie fatty materials, glycerol must be esterified with mixtures of fatty acids, such as those identified immediately above, using any of a wide variety of techniques such as:

(a) random rearrangement of long chain triglycerides (e.g., tribehenin) and medium chain triglycerides;

(b) esterification of glycerol with a blend of the corresponding fatty acids; and

(c) transesterification of a blend of medium and long chain fatty acid methyl esters with glycerol.

Random rearrangement of triglycerides is well-known in the art, as is the esterification of glycerol with fatty acids. For discussions on these subjects, see Hamilton et al., Fats and Oils: Chemistry and Technology, pp. 93-96, Applied Science Publishers Ltd., London (1980), and Swern, Bailey's Industrial Oil and Fat Products, 3d ed., pp. 941-943 and 958-965 (1964), (hereinafter Bailey's) both disclosures incorporated by reference herein. Transesterification is also discussed generally in Bailey's at pp. 958-963.

Fatty acids per se, methyl esters of fatty acids, and naturally occurring or synthetic fats and oils can serve as the source for the desired fatty acid chain lengths. For example, rapeseed oil provides a good source of $C_{22:0}$ fatty acids. $C_{8:0}$ and $C_{10:0}$ fatty acids can be obtained from coconut oil, palm kernel oil, and babassu oil, as well as from the commercial synthetic medium chain triglycerides such as Captex[R] 300 brand sold by Capital City Products, Dept. TR, P.O. Box 569, Columbus, Ohio 43216. Fractionation of fats and oils, fatty acids, or methyl esters by solvent or non-solvent fractional crystallization or fractional distillation can be used to concentrate the particular fatty acid chain lengths needed.

The subject glycerol polyesters can also be modified to have more preferred melting characteristics by fractionation after preparation. Solvent and non-solvent crystal fractionation or fractional distillation (e.g., conventional and molecular distillation) can be applied. Standard fractionation methods are discussed in Applewhite, Bailey's Industrial Oil and Fat Products, Vol. 3, 4th ed. (1985), pp. 1-39, John Wiley & Sons, New York, NY, incorporated by reference herein.

The invention will be illustrated by the following examples:

## EXAMPLE 1

### Preparation of Sucrose Fatty Acid Polyester for Use as the Low-Calorie Fatty Material in Dietetic Hamburger

Methyl esters of a fully hydrogenated (Iodine Value about 1) soy oil (90.8 kg), and 293 kg. of a 6.8 wt. percent solution of potassium hydroxide in methanol are mixed in a stainless steel batch reactor. This mixture is then heated to about 145°F (63°C) with agitation for 1 to 3 hours at atmospheric pressure. During this time, a portion of the methyl esters are saponified to form soap.

An additional 592.5 kg of methyl esters of a fully hydrogenated soy oil (Iodine Value about 1) and a partially hydrogenated soy oil (Iodine Value about 107), blended in a 57:43 ratio, is then added to the soap mixture. Granular sucrose (136.2 kg.) is added to the soap/ester mixture to give a 5:1 molar ratio of ester to sucrose. Potassium carbonate is then added to the mixture (approx. 0.5 wt. percent of the reaction mix) to catalyze the transesterification. This mixture is agitated and slowly heated at atmospheric pressure until the temperature reaches about 275°F (135°C). This is to remove the methanol. A vacuum is then pulled and the mixture agitated for up to 4 hours to form the mono-, di- and triesters of sucrose. Small quantities of tetra- and pentaesters are also formed during this stage. Additional methyl ester (950.7 kg) which has been preheated to 275°F (135°C) is added to bring and maintain the molar ratio of the esters to sucrose to 12:1. Additional potassium carbonate is then added to the mixture (approx. 0.5 wt. percent of the initial reaction mix). When the reaction conditions stabilize at 275°F (135°C), a nitrogen sparge is used to improve agitation and promote methanol stripping. This second reaction stage lasts approximately 4 to 12 hours.

The reaction mixture is then cooled under nitrogen to between 149°F (65°C) and 185°F (85°C). The crude reaction mixture is agitated with between 2 and 6 wt. percent water. The hydrated crude reaction mixture is passed through a centrifuge to separate a heavy and a light phase. The heavy phase which contains the soaps, excess sugars and potassium carbonate is discarded.

The light phase which contains methyl esters and the sucrose polyester is then dried to remove moisture at 176°F (80°C) under 70 mm Hg or less vacuum for 30 to 60 minutes. Filtrol 105 (1.0 wt. percent) is added and the mix is agitated at 167°F (75°C) to 185°F (85°C). The slurry is separated by filtration or other means until there is less than 0.1 wt. percent fines. The liquid is then passed through a 1 micromillimeter filter.

The refined and bleached reaction mix is then passed through a stainless steel wiped-film evaporator or other suitable equipment to distill off the bulk of the methyl esters. The distillation takes place at 392°F (200°C) to 455°F (235°C) under approximately 3 mm Hg of vacuum.

The sucrose polyester is then deodorized by passing downward through a stainless steel packed column deodorizer or other suitable device at 392°F (200°C) to 482°F (250°C) under a vacuum of about 5 mm Hg or less. Steam is introduced to the bottom of the column and passes counter-currently to the sucrose polyester. Feed rates and temperature are adjusted until the methyl ester content of the sucrose polyester is below 1000 ppm. The mixture is then cooled to between 149°F (65°C) to 185°F (85°C) and passed through a 1 micromillimeter filter. The sucrose polyester is stored in clean stainless steel drums.

Sucrose polyester made according to this procedure typically has the composition and properties shown in Table 1. This product is solid at room temperature, non-digestible (zero calories), and does not produce laxative side effect.

## TABLE 1

### Chemical and Physical Characteristics of Sucrose Fatty Acid Polyester

Fatty Acid Compositions

| | |
|---|---|
| $C_{16:0}$ | 10.7% |
| $C_{18:0}$ | 53.0% |
| $C_{18:1}$ | 20.2% |
| $C_{18:2}$ | 14.4% |
| $C_{18:3}$ | 0.9% |
| $C_{20:0}$ | 0.4% |
| Other | 0.4% |
| Iodine Value | 44.8% |

Ester Distribution

| | |
|---|---|
| Octa | 83.2% |
| Hepta | 15.3% |
| Hexa | 0.1% |
| Penta and Lower | None Detected |

Solid Fat Content

| | |
|---|---|
| 50°F | 63.6% |
| 70°F | 50.6% |
| 80°F | 38.3% |
| 92°F | 20.2% |
| 98.6°F | 11.0% |
| 105°F | 1.7% |

Viscosity @ 100°F

10 seconds$^{-1}$ @ 10 minutes    31.0 poise

Liquid/Solid Stability @ 100°F

486,000 G'S @ 1 hour    >95%

### Preparation of Dietetic Hamburger

Raw extra-lean ground beef of the composition shown in Table 2 is easily obtained by trimming "good", full-cut round of beef and passing it through a meat grinder. The composition of raw regular ground beef is shown in Table 2 for comparison.

## TABLE 2

| Raw Ground Beef | Tallow (%) | Saturated Fat (%) | Cholesterol (mg/100 g) | Protein (%) | Water (%) | Ash (%) |
|---|---|---|---|---|---|---|
| Extra Lean | 4.5 | 1.5 | 58.0 | 22.0 | 72.4 | 1.1 |
| Regular | 26.6 | 10.8 | 85.0 | 16.6 | 56.1 | 1.0 |

152 parts of the raw extra-lean ground beef having a temperature of about 40°F (4.4°C) is placed in a mixing bowl or other suitable vessel. 48 parts of sucrose polyester is heated to about 140°F (60°C) to melt it, and the liquid is added dropwise and mixed manually or by mechanical means into the extra-lean ground beef. The mixture is then passed through a meat grinder and split into 2 portions of 100 parts each.

One portion of 100 parts is placed in a mixing bowl or other suitable vessel, and 20 parts of cold tap water is added incrementally during manual or mechanical mixing. The blend is then passed through a meat grinder and formed into dietetic hamburger patties of about 1/4 pound each, labelled "A". The other portion of 100 parts is passed through a meat grinder and similarly formed into patties, labelled "B".

The dietetic "A" patties are fried in a pan on an electric range to medium doneness. For comparison purposes, the dietetic "B" patties are fried separately under the same conditions. Additionally, as a reference, hamburgers are made from raw regular ground beef by similarly forming into patties and frying under the same conditions.

The cooked dietetic "A", dietetic "B", and regular hamburgers are compared. The dietetic and regular hamburgers are very similar in appearance, texture, and flavor, but dietetic "A" is more tender and juicier than dietetic "B" which was prepared without added water. Both dietetic hamburgers provide substantial

14

reductions in calories, animal fat, saturated fat, and cholesterol.

Example 2

Preparation of Glycerol Polyesters of Medium and Long Chain Fatty Acids as the Low-Calorie Fatty Material in Dietetic Frankfurters

2.0 parts of glycerol (Procter & Gamble Superol Glycerine), 11.2 parts of medium chain fatty acids (Procter & Gamble C810 Fatty Acid), and 1.0 part of long chain fatty acids (Sherex Hydrofol 2260 Fatty Acid) are added to a glass or stainless steel reaction vessel equipped with agitator, external heating, nitrogen sparger, and reflux condenser with 130°C (266°F) inlet oil. The typical compositions of the fatty acids are shown in Table 3.

TABLE 3

| P&G C810 Fatty Acid | | Sherex Hydrofol 2260 Fatty Acid | |
|---|---|---|---|
| $C_{6:0}$ | 4% | $C_{16:0}$ | 1% |
| $C_{8:0}$ | 56% | $C_{18:0}$ | 27% |
| $C_{10:0}$ | 39% | $C_{20:0}$ | 9% |
| $C_{12:0}$ | <1% | $C_{22:0}$ | 61% |
| | | $C_{24:0}$ | 2% |

The mixture is steadily heated with agitation and nitrogen sparing to bring the temperature to 250°C (482°F) over an 8-hour period. During this time, water of reaction is removed through the use of the reflux condenser which selectively condenses and returns to the reactor vaporized medium chain fatty acids. Reflux is discontinued and reaction temperature is maintained at 250°C (482°F) for an additional 12 to 14 hours before cooling to end the reaction. The reaction product mixture contains 13% unreacted fatty acids, 74% trimedium chain glycerol polyesters, 12% monolong chain glycerol polyesters, and 1% dilong chain glycerol polyesters.

The reaction product mixture is passed through a Pfaudler wiped-film evaporator to remove the unreacted fatty acids and trimedium chain glycerol polyesters as distillate, leaving the monolong and dilong chain glycerol polyesters in the bottom stream. Using the bottom stream as feed, two additional evaporator passes are made. The evaporator conditions for the three passes are shown in Table 4.

TABLE 4

| | Average Pressure (mm Hg) | Average Jacket Temperature (°C) |
|---|---|---|
| 1st Pass | 0.9 | 279 (534°F) |
| 2nd Pass | 0.6 | 288 (550°F) |
| 3rd Pass | 0.4 | 290 (554°F) |

The typical composition of the bottom stream of the third evaporator pass, determined by internal standard gas chromatography is 3.3% trimedium chain glycerol polyesters, 88.1% monolong chain glycerol polyesters, and 6.4% dilong chain glycerol polyesters, having an overall fatty acid distribution of 26% $C_{8:0}$, 23% $C_{10:0}$, <1% $C_{12:0}$, 9% $C_{18:0}$, 1% $C_{20:0}$, 40% $C_{22:0}$, and 1% $C_{24:0}$. This low-calorie glycerol polyester is semi-solid at room temperature and has solidification points (titers) of 31°C (87.8°F), 33°C (91.4°F), and 38°C (100.4°F).

Before use as low-calorie fatty material, the glycerol polyester is freshly deodorized in a stainless steel batch deodorizer or other suitable device at 374°F (190°C) to 500°F (260°C) under a vacuum of about 0.25 mm Hg to about 5 mm Hg pressure with steam sparging. Deodorization is continued until the unreacted fatty acid content is below 500 ppm. The deodorizer contents are then cooled while using nitrogen sparging. After cooling to 149°F (65°C), the deodorizer is brought to atmospheric pressure. The glycerol polyester is stored in clean stainless steel drums.

Preparation of Dietetic Frankfurters

Raw extra-lean ground beef of composition "B" shown in Table 5 is obtained by trimming "good", top round beef and passing it through a meat grinder. Raw, extra-lean ground pork of composition "C" shown in Table 5 is easily obtained by trimming and grinding the ham or picnic cut of pork.

TABLE 5

| Raw Meat | Fat (%) | Saturated Fat (%) | Cholesterol (mg/100 g) | Protein (%) | Water (%) | Ash (%) |
|---|---|---|---|---|---|---|
| Extra-Lean Beef "B" | 3.4 | 1.2 | 57.0 | 22.8 | 72.5 | 1.1 |
| Extra-Lean Pork "C" | 7.5 | 3.2 | 60.0 | 20.0 | 71.5 | 1.0 |

37.5 lbs. of extra-lean beef "B" and 16.1 lbs. of extra-lean pork "C", each having a temperature of about 40°F (4.4°C), are placed in a mixing vessel. The glycerol polyester described herein is heated to about 140°F (60°C) to melt it. 27.7 lbs. of liquid glycerol polyester is added dropwise or incrementally and mixed manually or by mechanical means into the raw extra-lean ground meats. This mixture is then passed once through a meat grinder and placed in a silent cutter (colloid mill) along with 5.0 lbs. dried skim milk, 3.0 lbs. salt, 8 oz. sucrose, 2 oz. sodium nitrate, 1/4 oz. sodium nitrite , 6 oz. white pepper, 2 oz. ground coriander, 1 oz. ground sage, 1 oz. ground cinnamon, 1 oz. fresh garlic, 2 oz. mace, and 18.5 lbs. shaved ice and is chopped fine. The ice constitutes about 17% of the composition and is added to keep the temperature below 60°F (15.6°C), since heat is generated by the friction of the high-speed knives, and to provide the proper consistency of the sausage emulsion. A short time before the end of the chop, 3/4 oz. of ascorbic acid in aqueous solution is added.

The sausage mix is next vacuumized to remove captured air, stuffed into cellulose casings, and linked. The sausage links are smoked while the temperature of the smoker is raised gradually to 165°F (73.9°C) and held there until the internal temperature of the product reaches 145°F (62.8°C) to 155°F (68.3°C). Relative humidity is maintained at 78% to 80% to avoid excessive drying.

Next, the links are cooked by showering them with hot water in the smoker or by removing them to a water cooker. When an internal temperature of 155°F (68.3°C) is reached, the links are held at that temperature for about 20 minutes before chilling with a 6% brine solution refrigerated at about 28°F (-2.2°C). The casings are then peeled from the frankfurters, and the frankfurters are packaged.

The dietetic and regular frankfurters are heated in a microwave oven and then compared for taste. The dietetic frankfurters are equally juicy and flavorful even though they are significantly lower in calories, animal fat and saturated fat, and have about the same nutritional value (i. e., protein, carbohydrate, and ash). The dietetic frankfurters are significantly lower in animal fat, saturated fat, cholesterol, and calories.

Example 3

Preparation of Dietetic Frankfurters Containing Sucrose Fatty Acid Polyester as the Low-Calorie Fatty Material

Sucrose fatty acid polyester is prepared according to Example 1 and is used according to Example 2 in place of glycerol fatty acid polyester to prepare dietetic frankfurters.

The dietetic and regular frankfurters are heated in a microwave oven and then compared for taste. The dietetic frankfurters are equally juicy and flavorful even though they are substantially lower in calories, animal fat and saturated fat, and have about the same nutritional value (i.e., protein, carbohydrate, and ash). The dietetic frankfurters are significantly lower in animal fat, saturated fat, and cholesterol, and are even lower in calories than the dietetic frankfurters in Example 2 because sucrose polyester has a lower energy value than glycerol polyester.

**Claims**

1. A dietetic, comminuted meat composition comprising from 9-30% of animal protein from lean meat; from 25-70% total water; and from 0-10% non-fatty adjuvant materials selected from the group consisting of sodium or potassium nitrate, nitrite, phosphate ascorbate, or erythrobate; vinegar, citric acid, and malic acid; glucomo delta lactone; salt; sucrose, dextrose, lactose, and corn syrups or corn syrup solids; seasonings and flavor enhancers; cereal, starch, vegetable flour, soyflour; soy protein, non-fat milk, calcium-reduced non-fat milk, whey, sodium or calcium-caseinate, egg albumin; dietary fiber; edible gums and hydrocolloids; vitamins and minerals; characterized in that said composition further comprises from 10-50% of a fatty substance consisting essentially of from 30-100% low-calorie fatty materials, preferably polyol fatty acid polyesters, more preferably sugar fatty acid polyesters, sugar alcohol fatty acid polyesters, polyglycerol fatty acid polyesters, glycerol fatty acid polyesters, or mixtures thereof, most preferably sucrose fatty acid polyesters with the balance of said fatty substance being animal fat or vegetable fat.

2. A composition according to Claim 1 wherein the polyol fatty acid polyester has at least 4 fatty acid polyester groups, and wherein the polyol is selected from the group consisting of sugars, preferably sucrose, glucose, xylose, ribose, mannose, arabinose, galactose, fructose, sorbose, maltose, lactose, or mixtures thereof, and of sugar alcohols, preferably erythritol, xylitol, sorbitol, or mixtures thereof, containing from 4 to 8 hydroxyl groups and wherein the fatty acid groups and their geometric and positional isomers are saturated or unsaturated and have from 8 to 24, preferably from 8 to 18, carbon atoms.

3. A composition according to Claim 2 wherein the polyol fatty acid polyester is a polyglycerol fatty acid polyester having at least 5, preferably from 5 to 15, more preferably from 6 to 10 etherified glycerol units and at least 75% of its hydroxyl groups esterified with fatty acids and wherein the fatty acids and their geometric and positional isomers are saturated or unsaturated and have from 8 to 24, preferably from 8 to 18, carbon atoms.

4. A composition according to Claims 2 or 3 wherein the polyol fatty acid polyester has, at 37.8°C, a viscosity of at least 15 poise, preferably at least 30 poise, at a shear rate of 10 seconds$^{-1}$ after 10 minutes of steady shear; and a liquid/solid stability of at least 50%, preferably at least 80%.

5. A composition according to Claim 1 wherein the polyol fatty acid polyester comprises glycerol fatty acid polyester having at least 75% of its hydroxyl groups esterified such that from 40-100% of the fatty acid ester groups have saturated alkyl chains consisting essentially of 8 or 10 carbon atoms and the remaining fatty acid ester groups have saturated alkyl chains consisting essentially of 18 to 24 carbon atoms.

6. A composition according to Claim 5 wherein the glycerol fatty acid polyester has a fatty acid composition consisting of at least 80% $C_{10:0}$.

7. A composition according to Claim 6 wherein the glycerol fatty acid has a fatty acid composition consisting of 35-60% $C_{20:0}$ to $C_{24:0}$ and wherein the glycerol fatty acid polyester comprises greater than about 80% by weight of its molecules having one long chain fatty acid ester group and two medium chain fatty acid ester groups.

8. A raw dietetic ground beef composition comprising from 13-21% of protein from lean beef; from 40-70% water; and from 1-3% non-fatty adjuvant materials selected from the group consisting of sodium or potassium nitrate, nitrite, phosphate ascorbate, or erythrobate; vinegar, citric acid, and malic acid; glucomo delta lactone; salt; sucrose, dextrose, lactose, and corn syrups or corn syrup solids; seasonings and flavor enhancers; cereal, starch, vegetable flour, soyflour; soy protein, non-fat milk, calcium-reduced non-fat milk, whey, sodium or calcium-caseinate, egg albumin; dietary fiber; edible gums and hydrocolloids; vitamins and minerals; characterized in that it further comprises from 13-42% of a fatty substance consisting essentially of from 50-100% of low-calorie fatty materials, with the balance being animal fat or vegetable fat.

9. A cooked dietetic ground beef composition comprising from 19-27% of animal protein from lean beef; from 50-65% water and from 1-3% non-fatty adjuvant materials selected from the group consisting of sodium or potassium nitrate, nitrite, phosphate ascorbate, or erythrobate; vinegar, citric acid, and malic acid; glucomo delta lactone; salt; sucrose, dextrose, lactose, and corn syrups or corn syrup solids; seasonings and flavor enhancers; cereal, starch, vegetable flour, soyflour; soy protein, non-fat milk, calcium-reduced non-fat milk, whey, sodium or calcium-caseinate, egg albumin; dietary fiber; edible gums and hydrocolloids; vitamins and minerals; characterized in that it further comprises from 12-25% of a fatty substance consisting essentially of from about 50-100% of low-calorie fatty materials, with the balance being animal fat or vegetable fat.

10. A cooked dietetic sausage composition comprising from 12-24% of animal protein from lean beef, pork, or veal; from 51-66% water; and from 3-8% non-fatty adjuvant materials selected from the group consisting of sodium or potassium nitrate, nitrite, phosphate ascorbate, or erythrobate; vinegar, citric acid, and malic acid; glucomo delta lactone; salt; sucrose, dextrose, lactose, and corn syrups or corn syrup solids; seasonings and flavor enhancers; cereal, starch, vegetable flour, soyflour; soy protein, non-fat milk, calcium-reduced non-fat milk, whey, sodium or calcium-caseinate, egg albumin; dietary fiber; edible gums and hydrocolloids; vitamins and minerals; characterized in that it further comprises from 17-44% of a fatty substance consisting essentially of about 30-100% of low-calorie fatty materials, with the balance being animal fat or vegetable fat.